# EUROPEAN PATENT SPECIFICATION

(11) **EP 3 263 958 B1**
(45) Date of publication and mention of the grant of the patent: **01.04.2020**
(21) Application number: 16755412.0
(22) Date of filing: 22.02.2016
(51) Int. Cl.: F16K 11/07, F16K 31/122, F16K 31/46, F04B 9/125, F04B 39/10, F04B 49/22

(54) **PILOT VALVE**
PILOTVENTIL
VANNE PILOTE

(30) Priority: 23.02.2015 JP 2015033164
(43) Date of publication of application: 03.01.2018
(73) Proprietor: ANEST IWATA Corporation, Kohoku-ku Yokohama-shi, Kanagawa 223-8501 (JP)
(72) Inventor: WATANABE, Mitsuo, Yokohama-shi Kanagawa 223-8501 (JP); YOSIHARA , Kaoru, Yokohama-shi Kanagawa 223-8501 (JP)
(74) Representative: Hoffmann Eitle
(86) International application number: PCT/JP2016/055050
(87) International publication number: WO 2016/136666

(56) References cited:
- FR-A1- 2 225 638
- JP-A- H11 218 253
- JP-A- S50 150 027
- US-A- 3 555 966
- US-A- 3 846 049
- US-B1- 6 282 893
- US-B1- 6 386 841

## Description

### TECHNICAL FIELD

The present invention relates to pilot valves.

### BACKGROUND ART

There has conventionally been known a reciprocating piston pump in which a piston is driven through pilot valves provided at one and the other ends, respectively, of a cylinder (for example, see Patent Literatures 1 and 2). In response to pressing of one of the pilot valves by the piston, compressed gas is supplied into either a first space between one end of the cylinder body and the piston or a second space between the other end of the cylinder body and the piston, and gas is vented from the other of the first or second spaces. In this way, the piston is driven.

More specifically, the reciprocating piston pump is provided with a gas control valve. The gas control valve operates in association with the pilot valves to control the supply and venting of gas into and from the first and second spaces. The piston is driven by the gas control valve controlling the supply and venting of gas into and from the first and second spaces.

For example, the gas control valve has a switching valve reciprocating between one and the other ends of the gas control valve. One space between the one end of the gas control valve and the switching valve is supplied with gas from one pilot valve at all times, and an other space between the other end of the gas control valve and the switching valve is supplied with gas from the other pilot valve at all times.

When the one pilot valve is pressed by the piston, the one pilot valve operates to vent gas from the one space only at that time, and the switching valve is moved toward the one end by a differential pressure between the one space and the other space. Conversely, when the other pilot valve is pressed by the piston, the other pilot valve operates to vent gas from the other space only at that time, and the switching valve is moved toward the other end by a differential pressure between the other space and the one space.

When the pressing of either of the pilot valves by the piston ends, the gas venting operation returns to the gas supply operation; however, the switching valve does not move because the gas supplied into the one space and the gas supplied into the other space are at the same pressure.

The movement of the switching valve in response to the gas venting operation of the pilot valve causes the gas control valve to switch between a state where the gas control valve supplies compressed gas into the first space in the cylinder and vents gas from the second space in the cylinder and a state where the gas control valve supplies compressed gas into the second space and vents gas from the first space.

There is another form of the gas control valve in which the one space and the other space are provided with respective gas vent ports communicating with the outside to allow gas to be vented from the spaces at all times, and only when either of the pilot valves is operated by the piston, compressed gas is supplied into the one space or the other space, thus causing the switching valve to move.

US Patent 6,282,893, US Patent 3,846,049, JP H11 218 253 A, Published Japanese Translation of PCT International Publication No. 2012-527592 and Published Japanese Translation of PCT International Publication No. 2009-503340 form part of the state of the art useful for understanding the background to the present invention. FR 2 225 638 A1 also forms part of the state of the art, and is considered to disclose a configuration of pilot valve having the features corresponding to those recited in the preamble to claim 1 below.

### SUMMARY OF INVENTION

### TECHNICAL PROBLEM

The reciprocating piston pump having the above-described structure, however, suffers from the following problem. The movement of the switching valve of the gas control valve may not be completed correctly at the moment when either of the pilot valves is pressed by the piston, and the switching valve may stop at a position halfway between the one and the other ends of the gas control valve. In such a case, it becomes impossible to supply and vent gas into and from the cylinder through the gas control valve, and the drive of the reciprocating piston pump stops undesirably.

The present invention has been made in view of the above-described circumstances, and an object of the present invention is to provide a pilot valve for reliably moving a switching valve of a gas control valve.

### SOLUTION TO PROBLEM

According to a first aspect of the present invention, there is provided a pilot valve as recited in Claim 1 below. The dependent claims are directed to particular embodiments and implementations of the present invention.

According to the present invention, the first resilient member has a resilient force capable of positioning the first spool at the opening side of the valve body against a gas pressure applied to an end of the first spool at the opening side of the valve body, and the second resilient member has a weak resilient force such that the resilient force of the second resilient member alone cannot position the second spool at the opening side of the valve body against a gas pressure applied to an end of the second spool at the opening side of the valve body.

In some embodiments of the present invention, the area between the valve body and the first spool is sealed by seal members, and the area between the first spool and the second spool is sealed by contact between an inner peripheral surface of the first spool having a high surface accuracy and an outer peripheral surface of the second spool having a high surface accuracy.

In some embodiments of the present invention, the valve body includes a hollow cylindrical part having the through-hole portions and opening at the one end and an other end thereof, a lid part closing the other end of the cylindrical part, and a return button provided in the lid part at a position facing the other end of the second spool, which is opposite to the opening side of the valve body, the return button being capable of being actuated to press the other end of the second spool toward the opening side of the valve body.

### ADVANTAGEOUS EFFECTS OF INVENTION

According to the present invention, it is possible to provide a pilot valve for reliably moving a switching valve of a gas control valve.

### BRIEF DESCRIPTION OF DRAWINGS

Fig. 1 is a sectional view of a reciprocating piston pump according to one embodiment of the present invention.
Fig. 2 is an exploded perspective view of a pilot valve according to one embodiment of the present invention.
Fig. 3 is a sectional view of the pilot valve according to one embodiment of the present invention.
Fig. 4 is an illustration for explaining the operation of the pilot valve according to one embodiment of the present invention.
Fig. 5 is an illustration for explaining the operation of the pilot valve according to one embodiment of the present invention.
Fig. 6 is an illustration for explaining the operation of the pilot valve according to one embodiment of the present invention.
Fig. 7 is an illustration for explaining the operation of the reciprocating piston pump according to one embodiment of the present invention.
Fig. 8 is an illustration for explaining the operation of the reciprocating piston pump according to one embodiment of the present invention.
Fig. 9 is an illustration for explaining the operation of the reciprocating piston pump according to one embodiment of the present invention.
Fig. 10 is an illustration for explaining the operation of the reciprocating piston pump according to one embodiment of the present invention.
Fig. 11 is an illustration for explaining the operation of the reciprocating piston pump according to one embodiment of the present invention.
Fig. 12 is an illustration for explaining the operation of the reciprocating piston pump according to one embodiment of the present invention.
Fig. 13 is an illustration for explaining the operation of the reciprocating piston pump according to one embodiment of the present invention.
Fig. 14 is an illustration for explaining the operation of the reciprocating piston pump according to one embodiment of the present invention.

### DESCRIPTION OF EMBODIMENTS

A mode for carrying out the present invention (hereinafter referred to as an "embodiment") will be explained below in detail with reference to the accompanying drawings. It should be noted that, throughout the explanation of the embodiment, the same elements are denoted by the same numerals.

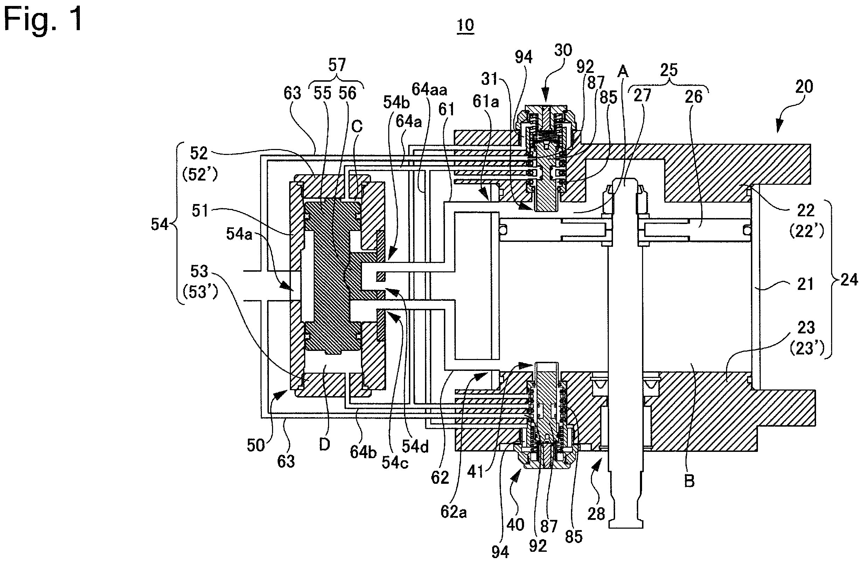

Fig. 1 is a sectional view showing a reciprocating piston pump 10 according to one embodiment of the present invention.

As shown in Fig. 1, the reciprocating piston pump 10 has a cylinder 20, a first pilot valve 30, a second pilot valve 40, and a gas control valve 50.

### (Cylinder)

The cylinder 20 has a cylinder body 24 and a piston 25 reciprocatably accommodated in the cylinder body 24.

The piston 25 has a piston head 26 and a piston rod 27. In this embodiment, the piston head 26 and the piston rod 27 are separate component parts. That is, the piston rod 27 has the piston head 26 assembled thereto. However, the piston 25 may have the piston head 26 and the piston rod 27 integrally formed together.

The cylinder body 24 has a hollow cylinder tube part 21, a cylinder's one end-side lid part 22' constituting one end of the cylinder body 24, and a cylinder's other end-side lid part 23' constituting the other end of the cylinder body 24.

Although in this embodiment the cylinder body 24 comprises the cylinder tube part 21, the cylinder's one end-side lid part 22', and the cylinder's other end-side lid part 23', it should be noted that the cylinder tube part 21 and the cylinder's one end-side lid part 22' may be integrally formed together, or the cylinder tube part 21 and cylinder's other end-side lid part 23' may be integrally formed together. That is, how to construct the cylinder body 24 specifically may be decided appropriately.

Accordingly, the cylinder's one end-side lid part 22' and the cylinder's other end-side lid part 23' will not hereinafter be referred to as "lid parts". Instead, the cylinder's one end-side lid part 22' will be referred to simply as "one end 22 of the cylinder body 24", and the cylinder's other end-side lid part 23' as "the other end 23 of the cylinder body 24".

It should, however, be noted that it is suitable for the cylinder body 24 to comprise the cylinder tube part 21, the cylinder's one end-side lid part 22', and the cylinder's other end-side lid part 23', as in this embodiment, in view of the ease of assembling the cylinder 20 and the ease of attaining the required inner surface accuracy for the inner surface of the cylinder 20 along which the piston head 26 is to slide.

At one end 22 of the cylinder body 24, the first pilot valve 30 is provided such that the piston 25 can press a spool 31 of the first pilot valve 30.

Similarly, at the other end 23 of the cylinder body 24, the second pilot valve 40 is provided such that the piston 25 can press a spool 41 of the second pilot valve 40.

Further, the other end 23 of the cylinder body 24 is provided with a piston rod exit through-hole 28 extending through the other end 23 of the cylinder body 24 to allow the piston rod 27 to extend to the outside of the cylinder body 24. The piston rod 27 is extended to the outside of the cylinder body 24 through the piston rod exit through-hole 28.

Meanwhile, the interior of the cylinder body 24 is divided into two spaces by the piston head 26.

That is, the cylinder 20 has a first cylinder interior space A between the one end 22 of the cylinder body 24 and the piston 25 (piston head 26) and a second cylinder interior space B between the other end 23 of the cylinder body 24 and the piston 25 (piston head 26).

The cylinder 20 is connected with a first gas line 61 for supplying gas into the first cylinder interior space A and for discharging gas from the first cylinder interior space A.

In this embodiment, the first gas line 61 is shown to be connected to a first cylinder gas supply-discharge port 61a provided in the cylinder tube part 21 at a position near the one end 22 of the cylinder body 24. However, the arrangement may be such that the first cylinder gas supply-discharge port 61a is provided in the one end 22 of the cylinder body 24, and the first gas line 61 is connected to the first cylinder gas supply-discharge port 61a provided in the one end 22 of the cylinder body 24.

Further, the cylinder 20 is connected with a second gas line 62 for supplying gas into the second cylinder interior space B and for discharging gas from the second cylinder interior space B.

In this embodiment, the second gas line 62 is shown to be connected to a second cylinder gas supply-discharge port 62a provided in the cylinder tube part 21 at a position near the other end 23 of the cylinder body 24. However, the arrangement may be such that the second cylinder gas supply-discharge port 62a is provided in the other end 23 of the cylinder body 24, and the second gas line 62 is connected to the second cylinder gas supply-discharge port 62a provided in the other end 23 of the cylinder body 24, in the same way as the above.

With the above-described structure, when compressed gas is supplied into the first cylinder interior space A from the first gas line 61 and, at the same time, gas in the second cylinder interior space B is discharged via the second gas line 62, the piston 25 moves toward the other end 23 of the cylinder body 24.

Conversely, when compressed gas is supplied into the second cylinder interior space B from the second gas line 62 and, at the same time, gas in the first cylinder interior space A is discharged via the first gas line 61, the piston 25 moves toward the one end 22 of the cylinder body 24.

Repeating such an action causes the piston to repeat reciprocating motion.

### (Gas Control Valve)

The gas control valve 50 is configured as follows. When the spool 31 of the first pilot valve 30 is pressed by the piston 25, the gas control valve 50 enters the above-described state where the gas control valve 50 supplies compressed gas into the first cylinder interior space A and, at the same time, discharges gas from the second cylinder interior space B.

When this state is reached, the piston 25 moves toward the other end 23 of the cylinder body 24, as has been stated above.

When the piston 25 presses the spool 41 of the second pilot valve 40 as a result of the above-described movement of the piston 25, the gas control valve 50, this time, enters the state where the gas control valve 50 supplies compressed gas into the second cylinder interior space B and, at the same time, discharges gas from the first cylinder interior space A. Thus, the piston 25 moves toward the one end 22 of the cylinder body 24.

The following is an explanation of a specific structure of the gas control valve 50. The gas control valve 50 has a control valve body 54 and a gas discharge port switching valve 57.

The control valve body 54 mainly has a control valve tube part 51, a control valve's one end-side lid part 52' constituting one end of the control valve body 54, and a control valve's other end-side lid part 53' constituting the other end of the control valve body 54.

Although in this embodiment the control valve body 54 mainly comprises the control valve tube part 51, the control valve's one end-side lid part 52', and the control valve's other end-side lid part 53', it should be noted that the control valve tube part 51 and the control valve's one end-side lid part 52' may be integrally formed together, for example. That is, how to construct the control valve body 54 specifically may be decided appropriately, in the same way as has been stated regarding the cylinder body 24.

Accordingly, the control valve's one end-side lid part 52' and the control valve's other end-side lid part 53' will not hereinafter be referred to as "lid parts". Instead, the control valve's one end-side lid part 52' will be referred to simply as "one end 52 of the control valve body 54", and the control valve's other end-side lid part 53' as "the other end 53 of the control valve body 54".

It should, however, be noted that it is suitable for the control valve body 54 to comprise the control valve tube part 51, the control valve's one end-side lid part 52', and the control valve's other end-side lid part 53', as in this embodiment, in view of the ease of assembling the control valve body 54 and the ease of attaining the required inner surface accuracy for the inner surface of the control valve body 54 along which the gas discharge port switching valve 57 is to slide.

Further, in this embodiment, a part to which the first gas line 61 and the second gas line 62 are connected is formed by a component part fitted into a portion of the control valve tube part 51. However, this connecting part need not be a separate component part but may be integrally formed with the control valve tube part 51. That is, the arrangement may be such that the gas discharge port switching valve 57 is configured not to project into the control valve tube part 51 as shown in Fig. 1 but to be capable of being accommodated in the control valve tube part 51, and that the connecting part formed by a separate component part in this embodiment is integrally formed with the control valve tube part 51.

The control valve body 54 has a gas supply port 54a supplied with gas from a gas supply source (e.g. a compressor), which is not shown in the figure, a first gas discharge port 54b, a second gas discharge port 54c, and a gas vent port 54d. The first gas discharge port 54b is connected with the above-described first gas line 61 for supplying gas into the first cylinder interior space A and for discharging gas from the first cylinder interior space A.

The second gas discharge port 54c is connected with the above-described second gas line 62 for supplying gas into the second cylinder interior space B and for discharging gas from the second cylinder interior space B.

The gas discharge port switching valve 57 comprises a trunk part 55 and a vent port connecting part 56 and is provided in the control valve body 54 so as to be reciprocatable in the control valve body 54 between one end 52 and the other end 53. The gas discharge port switching valve 57 selects one of the first gas discharge port 54b and the second gas discharge port 54c as a port through which gas supplied from the gas supply port 54a is to be discharged toward the cylinder 20, and connects the unselected one of the first and second gas discharge ports 54b and 54c to the gas vent port 54d.

Fig. 1 shows a state of the reciprocating piston pump 10 where the piston 25 is moving toward the first pilot valve 30 after pressing the spool 41 of the second pilot valve 40.

During the time period after the piston 25 has pressed the spool 41 of the second pilot valve 40 until the piston 25 presses the spool 31 of the first pilot valve 30, a first gas control valve interior space C between the one end 52 of the control valve body 54 and the gas discharge port switching valve 57 is kept being vented of gas. In this regard, the structure and operation of the pilot valves (first pilot valve 30 and second pilot valve 40) will be explained later in detail.

Meanwhile, a second gas control valve interior space D between the other end 53 of the control valve body and the gas discharge port switching valve 57 is kept being supplied with gas.

According, during the time period after the spool 41 of the second pilot valve 40 has been pressed by the piston 25 until the piston 25 presses the spool 31 of the first pilot valve 30, the gas control valve 50 is maintained in a state where the pressure in the second gas control valve interior space D is high, and the pressure in the first gas control valve interior space C is low

Therefore, the gas discharge port switching valve 57, which is positioned at the other end 53 of the control valve body 54 before the spool 41 of the second pilot valve 40 is pressed by the piston 25, is reliably moved toward the one end 52 of the control valve body 54 when the spool 41 of the second pilot valve 40 is pressed by the piston 25 by the pressure difference (pressure difference between the second gas control valve interior space D and the first gas control valve interior space C when the gas control valve 50 is in a state where the pressure in the second gas control valve interior space D is high, and the pressure in the first gas control valve interior space C is low), and the gas discharge port switching valve 57 is positioned at the one end 52 of the control valve body 54.

That is, the pressure difference is produced not only at the moment when the spool 41 of the second pilot valve 40 is pressed by the piston 25, but the pressure difference is maintained until the piston 25 presses the spool 31 of the first pilot valve 30. Therefore, even if there is a moment when the movement of the gas discharge port switching valve 57 is not satisfactory, the gas discharge port switching valve 57 is reliably moved so as to be positioned at the one end 52 of the control valve body 54 without stopping at a position halfway between the one end 52 and the other end 53 of the control valve body 54.

When the gas discharge port switching valve 57 is positioned at the one end 52 of the control valve body 54, gas supplied to the gas supply port 54a from the gas supply source (not shown) is supplied to the second gas discharge port 54c through a gap between the trunk part 55 of the gas discharge port switching valve 57 and the control valve body 54 and discharged toward the second cylinder interior space B from the second gas discharge port 54c.

That is, compressed gas is supplied from the second gas discharge port 54c into the second cylinder interior space B via the second gas line 62.

When the gas control valve 50 is in this state, the first gas discharge port 54b is connected to the gas vent port 54d through the vent port connecting part 56 of the gas discharge port switching valve 57. Therefore, gas in the first cylinder interior space A is vented to the outside via the first gas line 61.

Accordingly, the piston 25 moves toward the one end 22 of the cylinder body 24.

As a result of the movement of the piston 25, the spool 31 of the first pilot valve 30 is pressed by the piston 25. During the time period after the piston 25 has pressed the spool 31 of the first pilot valve 30 until the piston 25 presses the spool 41 of the second pilot valve 40, the first gas control valve interior space C is kept being supplied with gas, and the second gas control valve interior space D is kept being vented of gas.

Consequently, conversely to the above, the gas control valve 50 is maintained in a state where the pressure in the first gas control valve interior space C is high, and the pressure in the second gas control valve interior space D is low. Therefore, the gas discharge port switching valve 57 is reliably moved so as to be positioned at the other end 53 of the control valve body 54.

When the gas discharge port switching valve 57 is positioned at the other end 53 of the control valve body 54, gas supplied to the gas supply port 54a from the gas supply source (not shown) is supplied to the first gas discharge port 54b through a gap between the trunk part 55 of the gas discharge port switching valve 57 and the control valve body 54 and, this time, discharged toward the first cylinder interior space A from the first gas discharge port 54b.

That is, compressed gas is supplied from the first gas discharge port 54b into the first cylinder interior space A via the first gas line 61.

When the gas control valve 50 is in this state, the second gas discharge port 54c is connected to the gas vent port 54d through the vent port connecting part 56 of the gas discharge port switching valve 57. Therefore, gas in the second cylinder interior space B is vented to the outside via the second gas line 62.

Accordingly, the piston 25 moves toward the other end 23 of the cylinder body 24 conversely to the above.

The piston 25 is reciprocated as the above-described action is repeated.

### (Pilot Valves)

The first pilot valve 30 and the second pilot valve 40 have the same structure and therefore will be hereinafter explained simply as "the pilot valve 80" without distinguishing between the first pilot valve 30 and the second pilot valve.

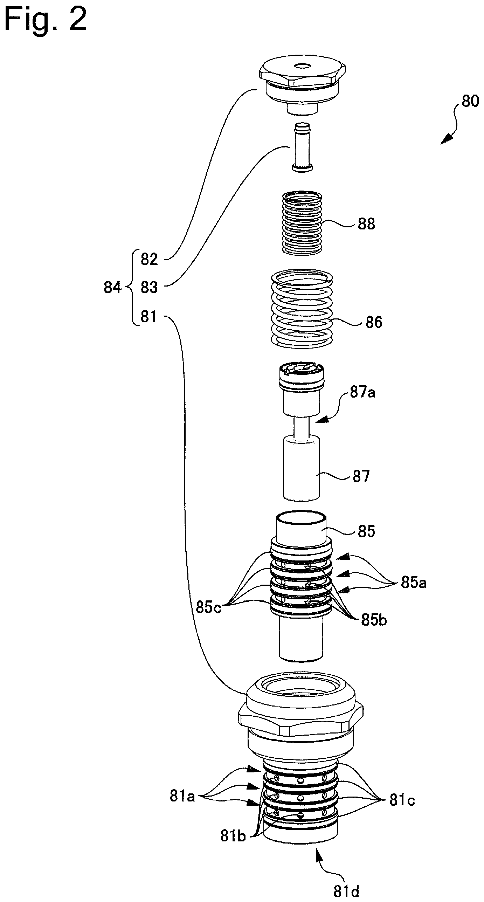

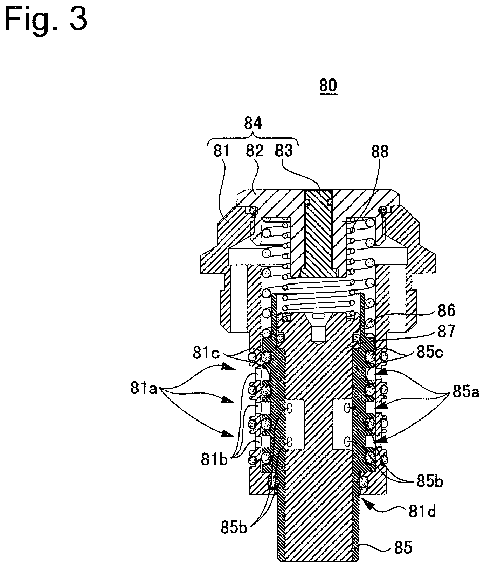

Fig. 2 is an exploded perspective view of the pilot valve 80, and Fig. 3 is a sectional view of the pilot valve 80 as assembled.

As shown in Figs. 2 and 3, the pilot valve 80 includes a bottomed cylinder-shaped valve body 84 having an opening 81d at one end thereof. The bottomed cylinder-shaped valve body 84 has a hollow cylindrical part 81, a lid part 82 closing the other end of the cylindrical part 81, and a return button 83 provided in the lid part 82.

As shown in Fig. 2, the cylindrical part 81 is provided with three through-hole portions 81a substantially equally spaced in a longitudinal direction. Each through-hole portion 81a is provided with a plurality of circumferentially spaced through-holes 81b.

That is, the valve body 84 has three through-hole portions 81a substantially equally spaced in the longitudinal direction.

It should be noted that the number of through-holes 81b provided in each through-hole portion 81a, per se, is not limited, but may be 1.

Further, seal members 81c are provided at opposite sides, respectively, in the longitudinal direction of each through-hole portion 81a.

The seal members 81c seal between the valve body 84 (cylindrical part 81) and the cylinder body 24 when the pilot valve 80 is attached to the cylinder body 24.

As shown in Figs. 2 and 3, the pilot valve 80 has a hollow first spool 85 slidably accommodated in the valve body 84.

As shown in Fig. 2, the first spool 85 is also provided with three through-hole portions 85a at the same substantially regular spacing as that of the through-hole portions 81a, which are provided in the valve body 84 (cylindrical part 81). Each through-hole portion 85a is provided with a plurality of circumferentially spaced through-holes 85b.

It should be noted that the number of through-holes 85b provided in each through-hole portion 85a, per se, is not limited, but may be 1.

Further, seal members 85c are provided at opposite sides, respectively, in the longitudinal direction of each through-hole portion 85a to seal between the valve body 84 (cylindrical part 81) and the first spool 85.

Fig. 3 shows a state where the first spool 85 is positioned at the opening 81d side of the valve body 84. As will be clear from Fig. 3, when the first spool 85 is positioned at the opening 81d side, the three through-hole portions 85a of the first spool 85 are respectively aligned with the three through-hole portions 81a of the valve body 84 (cylindrical part 81).

Further, as shown in Figs. 2 and 3, the pilot valve 80 has the following components: a first resilient member 86 disposed at an other end of the first spool 85 opposite to the opening 81d side of the valve body 84 (cylindrical part 81) to urge the first spool 85 toward the opening 81d side; a second spool 87 slidably accommodated in the first spool 85; and a second resilient member 88 disposed at an other end of the second spool 87 opposite to the opening 81d side of the valve body 84 to urge the second spool 87 toward the opening 81d side with a resilient force less than that of the first resilient member.

As shown in Fig. 3, the return button 83 is provided in the lid part 82 at a position facing the other end of the second spool 87, which is opposite to the opening 81d side of the valve body 84 (i.e. an end of the second spool 87 abutted by the second resilient member 88). When the return button 83 is pressed down, the other end of the second spool 87 is pressed toward the opening 81d side of the valve body 84.

The reason for providing the return button 83 will be explained later.

The area between the second spool 87 and the first spool 85 is sealed by using what is called "metal-to-metal sealing".

That is, the area between the second spool 87 and the first spool 85 is sealed by contact between an inner peripheral surface of the first spool 85 having a high surface accuracy and an outer peripheral surface of the second spool 85 having a high surface accuracy.

As shown in Fig. 2, the second spool 87 has a cut portion with a reduced outer diameter provided in a longitudinally intermediate region thereof.
The cut portion constitutes, as shown in Fig. 3, a communicating portion 87a allowing communication between two mutually adjacent through-hole portions 85a of the three through-hole portions 85a of the first spool 85.

It should be noted that, although in this embodiment the communicating portion 87a comprises a cut portion, the communicating portion 87a need not be limited to such a cut configuration.

Thus, the pilot valve 80 in this embodiment has two individually slidable spools (first spool 85 and second spool 87) as each of the spool 31 of the first pilot valve 30 and the spool 41 of the second pilot valve 40, which have been described above, and the spools are configured to perform double action.

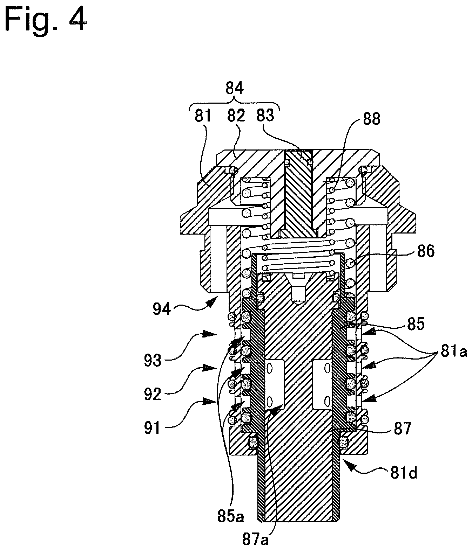

The operation of the spools (first spool 85 and second spool 87) will be explained with reference to Figs. 4 to 6.

It should be noted that the movement of the spools (first spool 85 and second spool 87) synchronized with the operation of the reciprocating piston pump 10 will be explained later in detail. Let us here explain states that the spools (first spool 85 and second spool 87) can assume, and how gas supplied from the gas supply source (not shown) to the pilot valves (first pilot valve 30 and second pilot valve 40) via respective pilot valve gas supply lines 63 shown in Fig. 1 flows in each of the states.

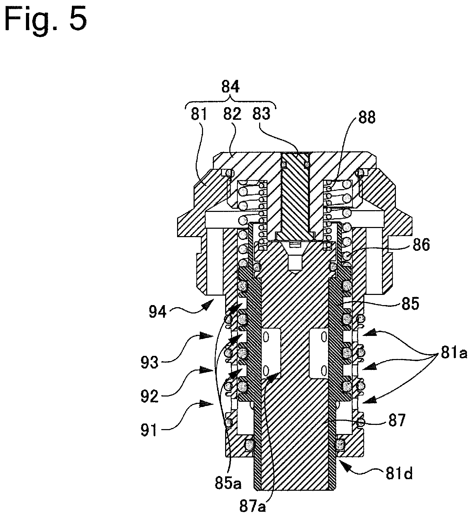

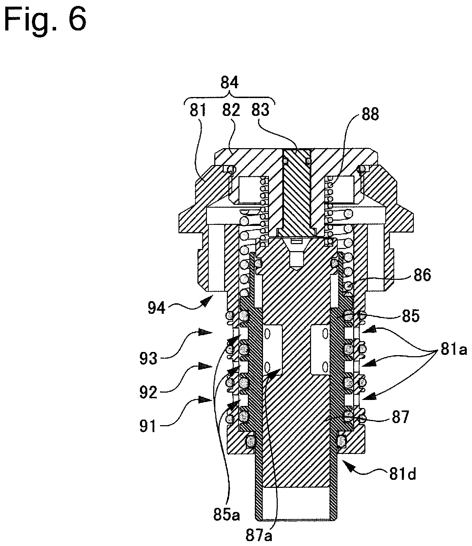

Fig. 4 shows the same state as that shown in Fig. 3. Fig. 5 shows a state where both the first spool 85 and the second spool 87 are positioned at a side of the valve body 84 opposite to the opening 81d side. Fig. 6 shows a state where the first spool 85 is positioned at the opening 81d side, and the second spool 87 is positioned at the side opposite to the opening 81d side.

First, to simplify explanation, let us give names to the three through-hole portions 81a of the valve body 84 with reference to Fig. 4.

It should be noted that in the following explanation also the through-hole portions 81a of the valve body 84 will occasionally be referred to by using these names for distinction purposes.

Of the through-hole portions 81a shown in Fig. 4, the lowermost through-hole portion 81a as seen in the figure will hereinafter be referred to as "the vent port 91" because of being connected to an atmosphere release line as will be understood by viewing the first pilot valve 30 in Fig. 1.

Similarly, of the through-hole portions 81a shown in Fig. 4, the second-lowest through-hole portion 81a (i.e. central through-hole portion 81a) will hereinafter be referred to as "the gas control valve port 92" because of being connected to the gas control valve 50 as will be understood by viewing the first pilot valve 30 in Fig. 1.

In addition, the uppermost through-hole portion 81a of the through-hole portions 81a shown in Fig. 4 will hereinafter be referred to as "the gas supply port 93" because of being a port supplied with gas from the gas supply source (not shown) as will be understood by viewing the first pilot valve 30 in Fig. 1.

Further, the valve body 84 has a gas supply opening (urging gas inlet 94) for supplying gas provided at the other end of the second spool 87, which is opposite to the opening 81d side of the valve body 84 and abutted by the second resilient member 88, in addition to the through-hole portions 81a. The gas supply opening is an urging gas inlet 94 for introducing gas as a pressing device urging the second spool 87 toward the opening 81d side of the valve body 84 in cooperation with the second resilient member 88 so as to switch a state shown in Fig. 6 where the second spool 87 is positioned at the side opposite to the opening 81d side to a state shown in Fig. 4 where the second spool 87 is positioned at the opening 81d side. The operation will be explained later.

It should be noted that the second pilot valve 40 shown in Fig. 1 is similar in structure to the above-described first pilot valve 30 except that the second pilot valve 40 is in reverse relation to the first pilot valve 30 in terms of vertical orientation of the components thereof.

The following is an explanation of specific flows of gas.

When the pilot valve 80 is in the state shown in Fig. 4, where both the first spool 85 and the second spool 87 are positioned at the opening 81d side of the valve body 84, gas supplied to the gas supply port 93 of the valve body 84 is supplied to the uppermost through-hole portion 85a of the first spool 85. This through-hole portion 85a, however, is closed by the second spool 87; therefore, the gas cannot be supplied beyond the through-hole portion 85a.

When the pilot valve 80 is in this state, the gas control valve port 92 of the valve body 84 is connected to the vent port 91 of the valve body 84 through the central and lowermost through-hole portions 85a of the first spool 85 and through the communicating portion 87a of the second spool 87.

Therefore, when the pilot valve 80 in this state is the first pilot valve 30, for example, what is connected to the gas control valve port 92 is a gas line 64a extending from the first gas control valve interior space C, which has been explained with reference to Fig. 1. Consequently, the gas in the first gas control valve interior space C is released (vented) to the outside through the vent port 91, resulting in a reduction in pressure in the first gas control valve interior space C.

It should be noted that when the pilot valve 80 in the above-described state is the second pilot valve 40, similarly, the gas in the second gas control valve interior space D, which has been explained with reference to Fig. 1, is released (vented) to the outside via a gas line 64b; therefore, the pressure in the second gas control valve interior space D reduces.

Next, when the pilot valve 80 is in the state shown in Fig. 5, where both the first spool 85 and the second spool 87 are positioned at the side of the valve body 84 opposite to the opening 81d side, i.e. when the spools (first spool 85 and second spool 87) are pressed by the piston 25, gas supplied to the gas supply port 93 of the valve body 84 passes via the central through-hole portion 85a of the first spool 85 and through the communicating portion 87a of the second spool 87 and is supplied to the gas control valve port 92 of the valve body 84 through the lowermost through-hole portion 85a of the first spool 85 again.

Therefore, when the pilot valve 80 in the above-described state is the first pilot valve 30, what is connected to the gas control valve port 92 is the gas line 64a extending from the first gas control valve interior space C, which has been explained with reference to Fig. 1. Consequently, gas is supplied into the first gas control valve interior space C, causing an increase in pressure in the first gas control valve interior space C.

It should be noted that when the pilot valve 80 in the above-described state is the second pilot valve 40, similarly, the pressure in the second gas control valve interior space D, which has been explained with reference to Fig. 1, is increased via the gas line 64b.

When the above-described state shown in Fig. 5 is reached, the pilot valve that is not pressed by the piston 25 reaches the state that has been explained with reference to Fig. 4.

More specifically, when the piston 25 separates from the first spool 85 and the second spool 87 after pressing the first and second spools 85 and 87, as shown in Fig. 5, the first spool 85 is automatically moved to the opening 81d side of the valve body 84 by the first resilient member 86, as shown in Fig. 6.

Accordingly, the pilot valve that is not pressed by the piston 25 is in the state shown in Fig. 6.

For example, Fig. 1 shows a state where the piston 25 is moving toward the first pilot valve 30 after pressing the spool 41 (first spool 85 and second spool 87) of the second pilot valve 40, as has been stated above; therefore, in this state, the second pilot valve 40 is in the state shown in Fig. 6.

As shown in Fig. 1, a branch line 64aa is branched off from a halfway point of the gas line 64a connecting between the first gas control valve interior space C and the gas control valve port 92 of the first pilot valve 30. Through the branch line 64aa, gas is also supplied to the urging gas inlet 94 of the second pilot valve 40 for introducing gas for urging the second spool 87 toward the opening 81d side of the valve body 84, which has been explained with reference to Fig. 4.

Accordingly, as has been explained with reference to Fig. 5, when the spool 31 (first spool 85 and second spool 87) of the first pilot valve 30 is pressed by the piston 25 and thus gas is supplied to the gas line 64a, the gas is also supplied to the branch line 64aa. Consequently, the second spool 87 of the second pilot valve 40, which is shown in Fig. 1 and in the state shown in Fig. 6, is pressed toward the opening 81d side of the valve body 84 by the gas introduced from the urging gas inlet 94, and the second spool 87 is positioned at the opening 81d side of the valve body 84, as shown in Fig. 4.

As has been mentioned above, Fig. 6 shows a state when the piston 25 has moved away from the first spool 85 and the second spool 87 after pressing the first and second spools 85 and 87 as shown in Fig. 5.

When the pilot valve 80 is in the above-described state, the first spool 85 and the second spool 87 are placed in an atmosphere that is being supplied with compressed gas, as will be understood from the fact that the piston 25 is moving away from the first and second spools 85 and 87.

The first resilient member 86, which urges the first spool 85 toward the opening 81d side of the valve body 84, comprises a resilient member urging the first spool 85 toward the opening 81d side of the valve body 84 with a force stronger than a force with which the compressed gas presses the opening 81d-side end of the first spool 85 toward a side of the valve body 84 opposite to the opening 81d side.

That is, the first resilient member 86 is configured to have a resilient force capable of positioning the first spool 85 at the opening 81d side of the valve body 84 against the gas pressure applied to the opening 81d-side end of the first spool 85.

On the other hand, the second spool 87 is urged toward the opening 81d side of the valve body 84 by the second resilient member 88 but cannot be moved toward the opening 81d side by the urging force of the second resilient member 88 alone even after the piston 25 has separated therefrom.

That is, the second resilient member 88 is configured to have a weak resilient force such that the resilient force of the second resilient member 88 alone cannot position the second spool 87 at the opening 81d side of the valve body 84 against the gas pressure applied to the opening 81d-side end of the second spool 87.

Although already mentioned, when gas is introduced from the urging gas inlet 94, the opening 81d-side end of the second spool 87 and the opposite end of the second spool 87 (second spool 87's end abutted by the second resilient member 88) are at the same pressure. Therefore, when this state is reached, the second spool 87 is moved so as to be positioned at the opening 81d side of the valve body 84 despite the fact that the second resilient member 88 has a weak resilient force.

It should be noted that when gas is introduced from the urging gas inlet 94, the second spool 87 is moved so as to be positioned at the opening 81d side of the valve body 84. There is almost no possibility that the second spool 87 may fail to be moved to the opening 81d side of the valve body 84. However, the second spool 87 might fail to be moved so as to be positioned at the opening 81d side because a resilient member having a weak resilient force is selected as the second resilient member 88. In this embodiment, therefore, the above-described return button 83 is provided so that the second spool 87 can be forcedly returned to the opening 81d side of the valve body 84 in case the second spool 87 fails to be moved toward the opening 81d side of the valve body 84.

Further, as will be clear from comparison of Figs. 5 and 6, when the pilot valve 80 is changed from a state (Fig. 5) where the first spool 85 and the second spool 87 are pressed by the piston 25 to a state where the piston 25 has separated from the first spool 85 and the second spool 87, the first spool 85 is positioned at the opening 81d side of the valve body 84, but the second spool 87 is maintained in the same position as when the second spool 87 is pressed by the piston 25. Therefore, no switching of lines takes place in the pilot valve 80.

That is, the state where the gas control valve port 92 is supplied with gas, which is realized when the first and second spools 85 and 87 are pressed by the piston 25 as shown in Fig. 5, is maintained even in the state shown in Fig. 6, where the piston 25 has separated from the first spool 85 and the second spool 87.

Accordingly, as will be understood by viewing the second pilot valve 40 in Fig. 1, for example, a state where gas is supplied into the second gas control valve interior space D is continued to be maintained.

That is, the supply of gas into the second gas control valve interior space D is continued.

On the other hand, the first pilot valve 30, which is a pilot valve at the opposite side to the second pilot valve 40, has the second spool 87 positioned at the opening 81d side of the valve body 84 when the second pilot valve 40 is pressed by the piston 25, as has been stated above. Consequently, as show in Fig. 1, the first gas control valve interior space C is in a vented state and this state is maintained until the spool 31 (first spool 85 and second spool 87) of the first pilot valve 30 is pressed by the piston 25.

That is, the venting of gas from the first gas control valve interior space C is continued.

As a result, the gas control valve 50 in this embodiment continues to maintain a differential pressure so as to position the gas discharge port switching valve 57 at either one end side or the other end side in the control valve body 54 at which the gas discharge port switching valve 57 should be positioned not only at the moment when the spool 31 of the first pilot valve 30 and the spool 41 of the second pilot valve 40 are each pressed by the piston 25 but also during the time period after the spool 31 of the first pilot valve 30 and the spool 41 of the second pilot valve 40 have been each pressed by the piston 25 until the relation between the gas discharge port switching valve 57 and the one end side or the other end side in the control valve body 54 at which the gas discharge port switching valve 57 should be positioned has changed, as has been stated above. Therefore, it is possible to suppress such a malfunction that the gas discharge port switching valve 57 undesirably stops at a halfway point in the middle of its movement.

### (Reciprocating Piston Pump Operation)

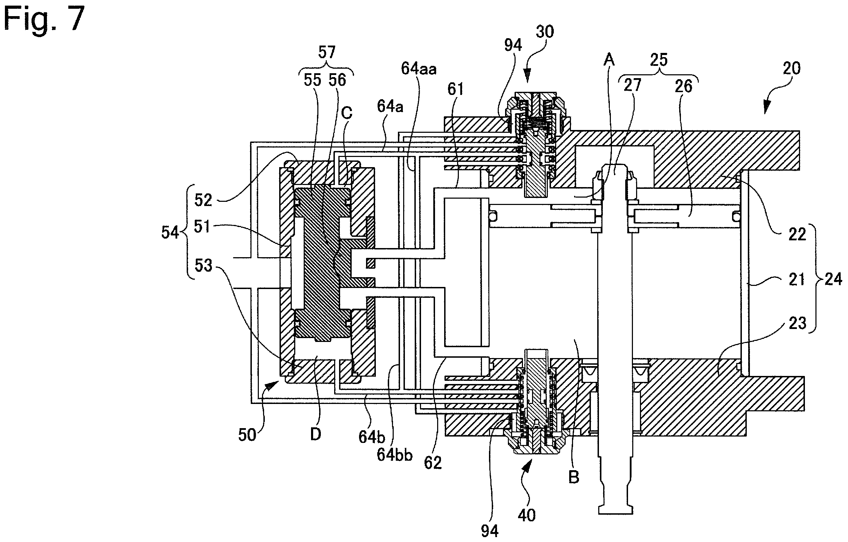

The operations of various sections of the reciprocating piston pump have already been explained above in detail; therefore, the operation of the reciprocating piston pump, which comprises a series of operations of the above-described various sections, will be explained below with reference to Figs. 7 to 14.

First, Fig. 7 is a drawing corresponding to Fig. 1, showing the reciprocating piston pump 10 in a state where the piston 25 is moving toward the one end 22 side of the cylinder body 24.

When the reciprocating piston pump 10 is in this state, the second pilot valve 40 is in the state shown in Fig. 6, and the first pilot valve 30 is in the state shown in Fig. 4.

Accordingly, compressed gas supplied to the second pilot valve from the gas supply source (not shown) via the pilot valve gas supply line 63 is supplied from the second pilot valve 40 into the second gas control valve interior space D of the gas control valve 50 via the gas line 64b. On the other hand, the first gas control valve interior space C of the gas control valve 50 is vented through the first pilot valve 30 via the gas line 64a.

Accordingly, the gas discharge port switching valve 57 of the gas control valve 50 is positioned at the one end 52 side of the control valve body 54. At this time, compressed gas supplied to the gas control valve 50 from the gas supply source (not shown) through the gas supply port 54a is supplied from the gas control valve 50 into the second cylinder interior space B of the cylinder 20 via the second gas line 62, and the gas in the first cylinder interior space A is vented through the gas control valve 50 via the first gas line 61. Consequently, the piston 25 moves toward the one end 22 side of the cylinder body 24.

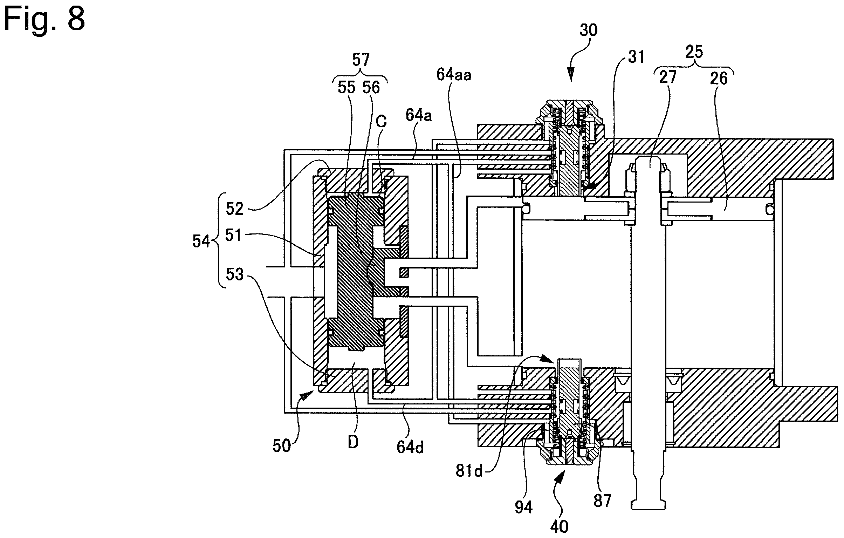

When the piston 25 presses the spool 31 of the first pilot valve 30, as shown in Fig. 8, the first pilot valve 30 reaches the state shown in Fig. 5.

When the state shown in Fig. 5 is reached, compressed gas is started to be supplied from the first pilot valve 30 into the first gas control valve interior space C of the gas control valve 50 via the gas line 64a.

At the same time, compressed gas is started to be supplied also to the urging gas inlet 94 of the second pilot valve 40 via the branch line 64aa, which is branched off from a halfway point of the gas line 64a.

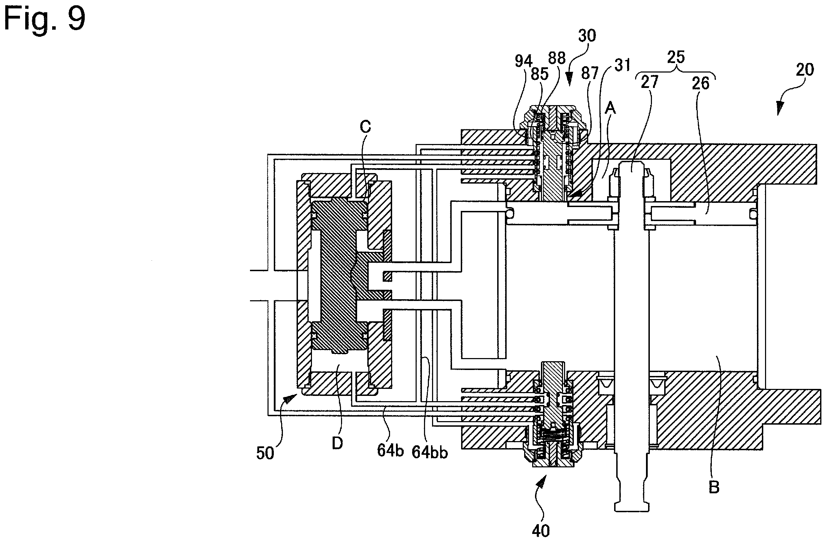

At this time, the second pilot valve 40 is in the state shown in Fig. 6. The drive state of the second pilot valve 40 changes only after the second spool 87 of the second pilot valve 40 has been moved so as to be positioned at the opening 81d side of the valve body 84 by the gas introduced into the urging gas inlet 94 of the second pilot valve 40. That is, the drive state of the second pilot valve 40 switches from a state shown in Fig. 8 where compressed gas is supplied into the second gas control valve interior space D of the gas control valve 50 from the second pilot valve 40 via the gas line 64b to a state shown in Fig. 9 where the gas in the second gas control valve interior space D is vented through the second pilot valve 40 via the gas line 64b.

Only after the above-described action has taken place, a differential pressure is generated between the first gas control valve interior space C and second gas control valve interior space D of the gas control valve 50, and the gas discharge port switching valve 57 moves. Consequently the gas supply and venting states of the first cylinder interior space A and second cylinder interior space B of the cylinder 20 change, and the direction of movement of the piston 25 changes.

Accordingly, the smoothness of driving of the reciprocating piston pump 10 depends on whether or not the second spool 87 of the second pilot valve 40 can smoothly move so as to be positioned at the opening 81d side of the valve body 84, which is an early stage of the above-described action.

Accordingly, in this embodiment, the area between the first spool 85 and the second spool 87 is sealed by metal-to-metal sealing, i.e. sealed by contact between metal surfaces of high surface accuracy, as has been stated above, thereby reducing sliding resistance more than in the case of using an ordinary sealing member such as an O-ring, and improving smoothness of movement. Thus, the second pilot valve 40 smoothly switches from the state shown in Fig. 8 to the state shown in Fig. 9.

When the state shown in Fig. 9 is reached, the second gas control valve interior space D of the gas control valve 50 is vented through the second pilot valve 40 via the gas line 64b, as has been stated above.

At this time, the gas supplied to the other end of the second spool 87 of the first pilot valve 30, which is abutted by the second resilient member 88, to urge the second spool 87 in cooperation with the second resilient member 88 is also vented because a branch line 64bb branched off from a halfway point of the gas line 64b is also connected to the urging gas inlet 94 of the first pilot valve 30.

Therefore, even after the piston 25 has separated from the spool 31 (first spool 85 and second spool 87) of the first pilot valve 30, the second spool 87 of the first pilot valve 30 does not move but remains in the position shown in Fig. 9.

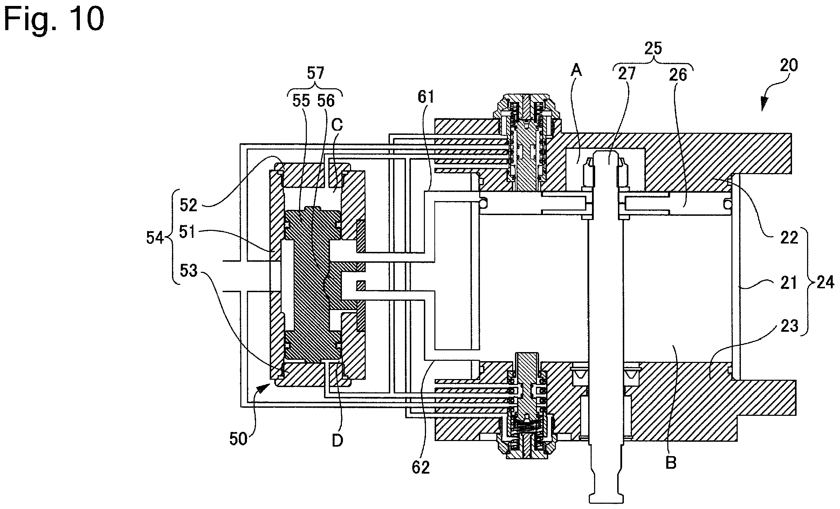

When a differential pressure is generated between the first gas control valve interior space C (high pressure) and second gas control valve interior space D (low pressure) of the gas control valve 50 in the state shown in Fig. 9, the gas discharge port switching valve 57 of the gas control valve 50 is moved so as to be positioned at the other end 53 side of the control valve body 54, as shown in Fig. 10.

As a result of the movement of the gas discharge port switching valve 57, compressed gas is supplied into the first cylinder interior space A of the cylinder 20 from the gas control valve 50 via the first gas line 61 and, at the same time, the gas in the second cylinder interior space B of the cylinder 20 is vented through the gas control valve 50 via the second gas line 62, causing the piston 25 to move toward the other end 23 side of the cylinder body 24.

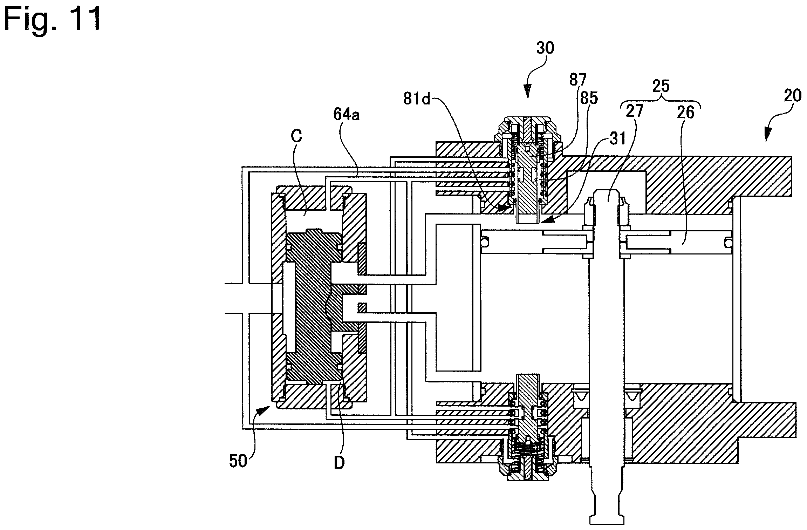

It should be noted that even after the piston 25 has separated from the spool 31 of the first pilot valve 30 as a result of the above-described movement, as shown in Fig. 11, the second spool 87 of the spool 31 does not move, but only the first spool 85 is moved so as to be positioned at the opening 81d side of the valve body 84, as has been stated above. Thus, the drive state of the first pilot valve 30 when the spool 31 of the first pilot valve 30 is pressed by the piston 25 is maintained.

That is, a state where gas is supplied into the first gas control valve interior space C of the gas control valve 50 from the first pilot valve 30 via the gas line 64a is continued to be maintained.

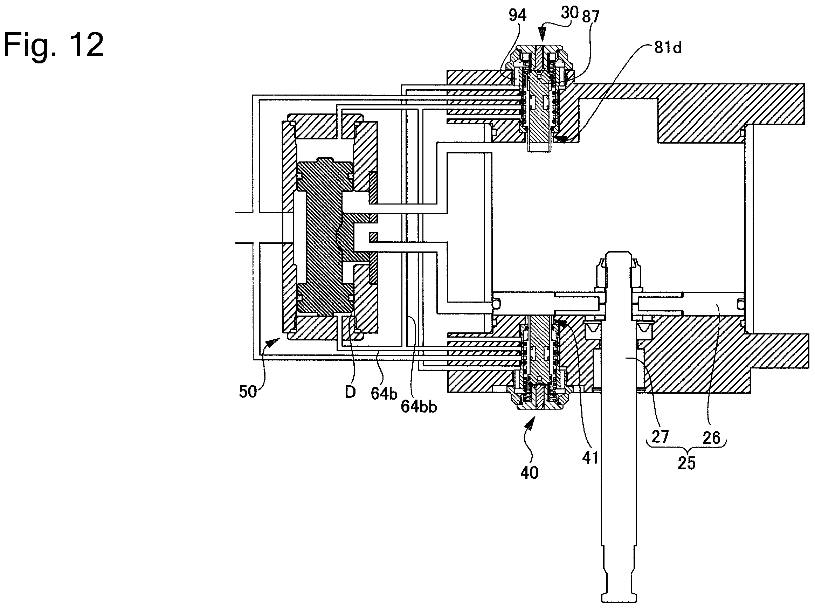

When the piston 25 presses the spool 41 of the second pilot valve 40, as shown in Fig. 12, compressed gas is started to be supplied from the second pilot valve 40 into the second gas control valve interior space D of the gas control valve 50 via the gas line 64b and, at the same time, gas for urging the second spool 87 of the first pilot valve 30 toward the opening 81d side of the valve body 84 is supplied to the urging gas inlet 94 of the first pilot valve 30 via the branch line 64bb, which is branched off from a halfway point of the gas line 64b.

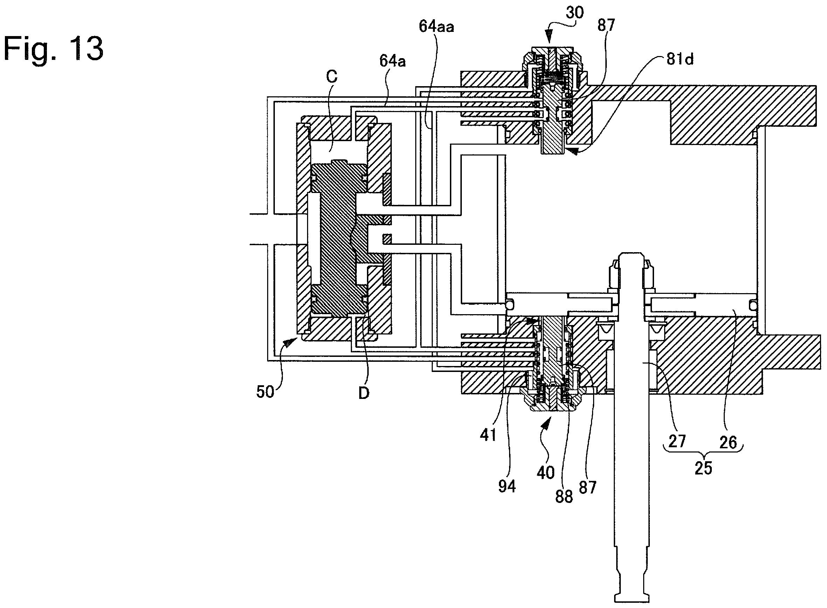

Consequently, as shown in Fig. 13, the second spool 87 of the first pilot valve 30 is positioned at the opening 81d side of the valve body 84, and the gas in the first gas control valve interior space C of the gas control valve 50 is vented through the first pilot valve 30 via the gas line 64a, resulting in a differential pressure being generated between the first gas control valve interior space C (low pressure) and second gas control valve interior space D (high pressure) of the gas control valve 50.

At this time, the gas supplied to the side of the second pilot valve 40 closer to the second resilient member 88, which abuts against the second spool 87, is vented via the branch line 64aa, which is branched off from a halfway point of the gas line 64a and connected to the urging gas inlet 94 of the second pilot valve 40, so that even after the piston 25 has separated from the spool 41 of the second pilot valve 40, the second spool 87 of the second pilot valve 40 maintains the position shown in Fig. 13.

Therefore, even after the piston 25 has separated from the second pilot valve 40, the supply of gas into the second gas control valve interior space D of the gas control valve 50 is maintained.

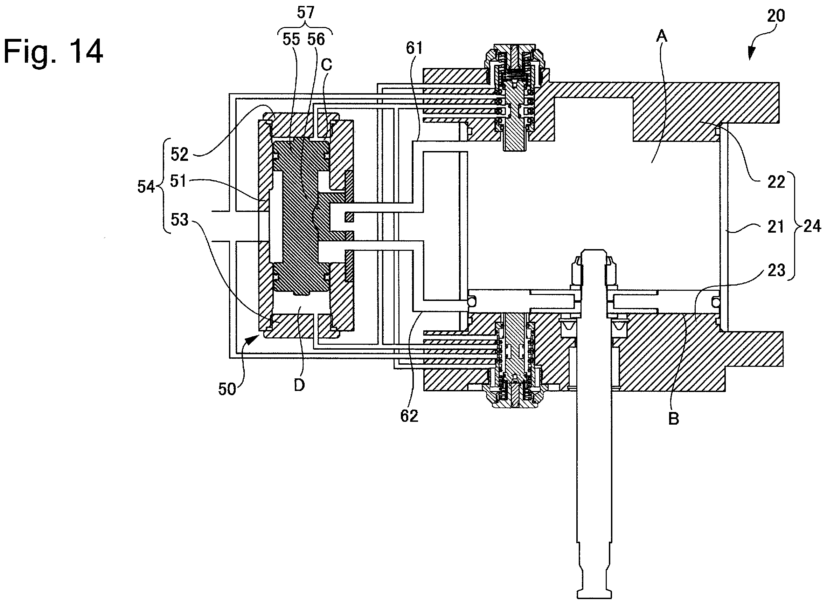

Thus, a differential pressure is generated between the first gas control valve interior space C (low pressure) and second gas control valve interior space D (high pressure) of the gas control valve 50, which causes the gas discharge port switching valve 57 of the gas control valve 50 to be moved so as to be positioned at the one end 52 side of the control valve body 54, as shown in Fig. 14.

As a result of the above-described movement, compressed gas is supplied into the second cylinder interior space B of the cylinder 20 from the gas control valve 50 via the second gas line 62 and, at the same time, the gas in the first cylinder interior space A of the cylinder 20 is vented through the gas control valve 50 via the first gas line 61. Consequently, the piston 25 moves toward the one end 22 side of the cylinder body 24 again to reach the state shown in Fig. 7.

In this way, the reciprocating piston pump 10 of this embodiment is driven.

As has been stated above, with the pilot valve 80 of this embodiment, it is possible to always maintain a state where a differential pressure can be generated between the first gas control valve interior space C and second gas control valve interior space D of the gas control valve 50 by making one of the pressures in the spaces C and D higher than the other, and the differential pressure relationship between the spaces C and D can be reversed by pressing of either of the pilot valves by the piston, as has been explained in detail. Therefore, the gas discharge port switching valve 57 of the gas control valve 50 can be moved reliably.

Although the pilot valve according to the present invention has been explained above on the basis of a specific embodiment, the present invention is not limited to the embodiment.

For example, in the pilot valve 80 of this embodiment, coil springs are used as the first resilient member 86 and the second resilient member 88. However, the first and second resilient members 86 and 88 may be resilient members other than coil springs.

Further, although the pilot valve 80 of this embodiment is provided with three through-hole portions as each of the groups of through-hole portions 81a and 85a, each of the groups of through-hole portions 81a and 85a may comprise three or more through-hole portions. In this case, the communicating portion 87a may be configured to communicate between two or more mutually adjacent through-hole portions 85a.

With the above-described alternative arrangement, another gas flow port can be made in addition to those described above, and this port can be used for another action.

Further, in the above-described embodiment, the spool of the pilot valve 80, i.e. each of the spool 31 of the first pilot valve 30 and the spool 41 of the second pilot valve 40, comprises two spools, i.e. the first spool 85 and the second spool 87. However, the arrangement may be as follows. The first spool 85 is omitted. Instead, the second spool 87 is configured to be slidable in contact with the inner peripheral surface of the valve body 84, and the second resilient member 88, which urges the second spool 87, has a weak resilient force such that the resilient force of the second resilient member 88 alone cannot position the second spool 87 at the opening 81d side of the valve body 84 against the gas pressure applied to the opening 81d-side end of the second spool 87.

With the above-described alternative arrangement also, the pilot valve 80 per se can operate in the same way as the above.

However, the structure comprising two spools, which uses the first spool 85 and the second spool 87 as shown in the above-described embodiment, is more suitable because the spool movement is smoother.

That is, as will be clear from Fig. 6, the first spool 85 has been moved to the opening 81d side of the valve body 84 before the second spool 87 is moved, and therefore, a part of the sliding surface of the second spool 87 is not in contact with the first spool 85. Accordingly, the sliding resistance can be suppressed to a small level at the moment when the second spool 87 is started to be moved toward the opening 81d side of the valve body 84 by the gas supplied from the urging gas inlet 94 to change the drive state from the state shown in Fig. 6 to the state shown in Fig. 4. Thus, the second spool 87 can start moving smoothly.

Therefore, it is suitable that the spool of the pilot valve 80, i.e. each of the spool 31 of the first pilot valve 30 and the spool 41 of the second pilot valve 40, should comprise two spools, i.e. the first spool 85 and the second spool 87.

Thus, the present invention is not limited to the specific embodiments, but changes and improvements may be properly made thereto, and such changes and modifications are also included in the scope of the present invention, which will be apparent to those skilled in the art from the appended claims.

Although only some exemplary embodiments of the present invention have been described above, those skilled in the art will readily appreciate that various changes or improvements can be made to the exemplary embodiments without materially departing from the novel teaching and advantages of the present invention, while remaining within the scope thereof as defined by the appended claims. The foregoing embodiments may be combined at will, as long as the combination remains within the scope of the appended claims.

### REFERENCE SIGNS LIST

- 10:: reciprocating piston pump
- 20:: cylinder
- 21:: cylinder tube part
- 22:: one end
- 22':: cylinder's one end-side lid part
- 23:: other end
- 23':: cylinder's other end-side lid part
- 24:: cylinder body
- 25:: piston
- 26:: piston head
- 27:: piston rod
- 28:: piston rod exit through-hole
- 30:: first pilot valve
- 31:: spool
- 40:: second pilot valve
- 41:: spool
- 50:: gas control valve
- 52:: one end
- 52':: control valve's one end-side lid part
- 53:: other end
- 53':: control valve's other end-side lid part
- 54:: control valve body
- 54a:: gas supply port
- 54b:: first gas discharge port
- 54c:: second gas discharge port
- 54d:: gas vent port
- 55:: trunk part
- 56:: vent port connecting part
- 57:: gas discharge port switching valve
- 61:: first gas line
- 61a:: first cylinder gas supply-discharge port
- 62:: second gas line
- 62a:: second cylinder gas supply-discharge port
- 63:: pilot valve gas supply line
- 64a:: gas line
- 64aa:: branch line
- 64b:: gas line
- 64bb:: branch line
- 80:: pilot valve
- 81:: cylindrical part
- 81a:: through-hole portions
- 81b:: through-holes
- 81c:: seal members
- 81d:: opening
- 82:: lid part
- 83:: return button
- 84:: valve body
- 85:: first spool
- 85a:: through-hole portions
- 85b:: through-holes
- 85c:: seal members
- 86:: first resilient member
- 87:: second spool
- 87a:: communicating portion
- 88:: second resilient member
- 91:: vent port
- 92:: gas control valve port
- 93:: gas supply port
- 94:: urging gas inlet
- A:: first cylinder interior space
- B:: second cylinder interior space
- C:: first gas control valve interior space
- D:: second gas control valve interior space

## Claims

1. A pilot valve comprising:
a bottomed cylinder-shaped valve body (84) having an opening (81d) at one end thereof;
a spool slidably accommodated in the valve body; and
a resilient member disposed at an other end of the spool opposite to the opening side of the valve body to urge the spool toward the opening side of the valve body;
the valve body having at least three through-hole portions (81a) substantially equally spaced in a longitudinal direction of the valve body;
the spool allowing communication between at least two mutually adjacent through-hole portions of the valve body;
wherein the resilient member is configured to press the spool toward the opening side of the valve body in cooperation with a pressing device, thereby switching the spool from a state where the spool is positioned at a side of the valve body opposite to the opening side to a state where the spool is positioned at the opening side,
wherein the spool includes a hollow first spool (85) slidably accommodated in the valve body, and a second spool (87) slidably accommodated in the first spool;
the resilient member comprising:
a first resilient member (86) disposed at an other end of the first spool opposite to the opening side of the valve body to urge the first spool toward the opening side; and
a second resilient member (88) disposed at an other end of the second spool opposite to the opening side of the valve body to urge the second spool toward the opening side,
the second spool having a communicating portion (87a) that is configured to allow communication between at least two mutually adjacent through-hole portions of the three through-hole portions of the first spool,
**characterized in that** the second resilient member is disposed to urge the second spool toward the opening side with a resilient force less than that of the first resilient member,
the first spool having at least three through-hole portions (85a) that are respectively aligned with the three through-hole portions of the valve body when the first spool is positioned at the opening side of the valve body.

2. The pilot valve of claim 1, wherein the pressing device includes an urging gas inlet (94) for introducing a gas;
the valve body being provided with the urging gas inlet.

3. The pilot valve of claim 1 or 2, wherein the first resilient member includes a resilient force capable of positioning the first spool at the opening side of the valve body against a gas pressure applied to an end of the first spool at the opening side of the valve body; and
the second resilient member includes a weak resilient force such that the resilient force of the second resilient member alone cannot position the second spool at the opening side of the valve body against a gas pressure applied to an end of the second spool at the opening side of the valve body.

4. The pilot valve of any one of claims 1 or 2, wherein an area between the valve body and the first spool is sealed by seal members (85c), and an area between the first spool and the second spool is sealed by contact between an inner peripheral surface of the first spool having a high surface accuracy and an outer peripheral surface of the second spool having a high surface accuracy.

5. The pilot valve of any one of claims 1 to 4, wherein the valve body includes:
a hollow cylindrical part (81) having the through-hole portions and opening at the one end and an other end thereof;
a lid part (82) closing the other end of the cylindrical part; and
a return button (83) provided in the lid part at a position facing the other end of the second spool, which is opposite to the opening side of the valve body, the return button being capable of being actuated to press the other end of the second spool toward the opening side of the valve body.

## Patentansprüche

1. Pilotventil umfassend:
einen zylinderförmigen Ventilkörper (84) mit Boden, der eine Öffnung (81d) an einem Ende davon aufweist;
eine Rolle, die schiebbar im Ventilkörper beherbergt ist; und
ein nachgiebiges Element, das an einem anderen Ende der Rolle gegenüber der Öffnungsseite des Ventilkörpers angeordnet ist, um die Rolle zur Öffnungsseite des Ventilkörpers zu drängen;
wobei der Ventilkörper mindestens drei Durchlasslochabschnitte (81a) aufweist, die im Wesentlichen in einer Längsrichtung des Ventilkörpers gleich beabstandet sind;
die Rolle Kommunikation zwischen mindestens zwei aneinandergrenzenden Durchlassabschnitten des Ventilkörpers erlaubt;
wobei das nachgiebige Element konfiguriert ist, die Rolle in Zusammenwirken mit einer Pressvorrichtung zur Öffnungsseite des Ventilkörpers zu pressen, wodurch die Rolle von einem Zustand, wo die Rolle an einer Seite des Ventilkörpers gegenüber der Öffnungsseite positioniert ist, zu einem Zustand, wo die Rolle an der Öffnungsseite positioniert ist, umgeschaltet wird,
wobei die Rolle eine hohle erste Rolle (85), die im Ventilkörper schiebbar beherbergt ist, und eine zweite Rolle (87), die in der ersten Rolle schiebbar beherbergt ist, beinhaltet;
wobei das nachgiebige Element umfasst:
ein erstes nachgiebiges Element (86), das an einem anderen Ende der ersten Rolle gegenüber der Öffnungsseite des Ventilkörpers angeordnet ist, um die erste Rolle zur Öffnungsseite zu drängen; und
ein zweites nachgiebiges Element (88), das an einem anderen Ende der zweiten Rolle gegenüber der Öffnungsseite des Ventilkörpers angeordnet ist, um die zweite Rolle zur Öffnungsseite zu drängen,
wobei die zweite Rolle einen Kommunikationsabschnitt (87a) aufweist, der konfiguriert ist, Kommunikation zwischen mindestens zwei aneinandergrenzenden Durchlasslochabschnitten der drei Durchlasslochabschnitte der ersten Rolle zu erlauben,
**dadurch gekennzeichnet, dass** das zweite nachgiebige Element so angeordnet ist, dass es die zweite Rolle mit einer Federkraft zur Öffnungsseite drängt, die geringer als die des ersten nachgiebigen Elements ist,
wobei die erste Rolle mindestens drei Durchlasslochabschnitte (85a) aufweist, die jeweils mit den drei Durchlasslochabschnitten des Ventilkörpers ausgerichtet sind, wenn die erste Rolle bei der Öffnungsseite des Ventilkörpers positioniert ist.

2. Pilotventil nach Anspruch 1, wobei die Pressvorrichtung einen Dränggaseinlass (94) zum Einleiten eines Gases beinhaltet;
der Ventilkörper mit dem Dränggaseinlass bereitgestellt ist.

3. Pilotventil nach Anspruch 1 oder 2, wobei das erste nachgiebige Element eine Federkraft beinhaltet, die fähig ist, die erste Rolle an der Öffnungsseite des Ventilkörpers zu positionieren, entgegen einem Gasdruck, der an einem Ende der ersten Rolle an der Öffnungsseite des Ventilkörpers angewendet wird; und
das zweite nachgiebige Element eine schwache Federkraft beinhaltet, sodass die Federkraft des zweiten nachgiebigen Elements die zweite Rolle nicht alleine an der Öffnungsseite des Ventilkörpers positionieren kann, gegen einen Gasdruck, der an einem Ende der zweiten Rolle an der Öffnungsseite des Ventilkörpers angewendet wird.

4. Pilotventil nach einem der Ansprüche 1 oder 2, wobei ein Gebiet zwischen dem Ventilkörper und der ersten Rolle durch Dichtungselemente (85c) abgedichtet ist und ein Gebiet zwischen der ersten Rolle und der zweiten Rolle durch Kontakt zwischen einer Innenumfangsfläche der ersten Rolle, die eine hohe Flächengenauigkeit aufweist, und einer Außenumfangsfläche der zweiten Rolle, die eine hohe Flächengenauigkeit aufweist, abgedichtet ist.

5. Pilotventil nach einem der Ansprüche 1 bis 4, wobei der Ventilkörper beinhaltet:
einen hohlen zylindrischen Teil (81), der die Durchlasslochabschnitte aufweist und sich an dem einen Ende und an einem anderen Ende davon öffnet;
einen Deckelteil (82), der das andere Ende des zylindrischen Teils schließt; und
einen Rückstellknopf (83), der im Deckelteil an einer Position bereitgestellt ist, die zum anderen Ende der zweiten Rolle zeigt, die gegenüber der Öffnungsseite des Ventilkörpers ist, wobei der Rückstellknopf fähig ist betätigt zu werden, um das andere Ende der zweiten Rolle zur Öffnungsseite des Ventilkörpers zu pressen.

## Revendications

1. Vanne pilote comprenant:
un corps de vanne en forme de cylindre avec fond (84) ayant une ouverture (81d) à une extrémité de celui-ci ;
une bobine logée de manière coulissante dans le corps de vanne ; et
un élément élastique disposé à une autre extrémité de la bobine opposée au côté d'ouverture du corps de vanne pour pousser la bobine vers le côté d'ouverture du corps de vanne ;
le corps de vanne ayant au moins trois portions à trou traversant (81a) espacées de manière sensiblement égale dans une direction longitudinale du corps de vanne ;
la bobine permettant la communication entre au moins deux portions à trou traversant mutuellement adjacentes du corps de vanne ;
dans laquelle l'élément élastique est configuré pour presser la bobine vers le côté d'ouverture du corps de vanne en coopération avec un dispositif de pressage, commutant ce faisant la bobine d'un état dans lequel la bobine est positionnée au niveau d'un côté du corps de vanne opposé au côté d'ouverture à un état dans lequel la bobine est positionnée au niveau du côté d'ouverture,
dans laquelle la bobine inclut une première bobine creuse (85) logée de manière coulissante dans le corps de vanne, et une deuxième bobine (87) logée de manière coulissante dans la première bobine ;
l'élément élastique comprenant :
un premier élément élastique (86) disposé au niveau d'une autre extrémité de la première bobine opposée au côté d'ouverture du corps de vanne pour pousser la première bobine vers le côté d'ouverture ; et
un deuxième élément élastique (88) disposé au niveau d'une autre extrémité de la deuxième bobine opposée au côté d'ouverture du corps de vanne pour pousser la deuxième bobine vers le côté d'ouverture,
la deuxième bobine ayant une partie de communication (87a) qui est configurée pour permettre la communication entre au moins deux portions à trou traversant mutuellement adjacentes des trois portions à trou traversant de la première bobine,
**caractérisée en ce que** le deuxième élément élastique est disposé pour pousser la deuxième bobine vers le côté d'ouverture avec une force élastique inférieure à celle du premier élément résilient,
la première bobine ayant au moins trois portions à trou traversant (85a) qui sont respectivement alignées avec les trois portions à trou traversant du corps de vanne lorsque la première bobine est positionnée au niveau du côté d'ouverture du corps de vanne.

2. Vanne pilote selon la revendication 1, dans laquelle le dispositif de pressage inclut une entrée de gaz de poussée (94) pour l'introduction d'un gaz ;
le corps de vanne étant doté d'une entrée de gaz de poussée.

3. Vanne pilote selon la revendication 1 ou 2, dans laquelle le premier élément élastique inclut une force élastique capable de positionner la première bobine au niveau du côté d'ouverture du corps de vanne contre une pression de gaz appliquée à une extrémité de la première bobine au niveau du côté d'ouverture du corps de vanne ; et
le deuxième élément élastique inclut une faible force élastique de sorte que la force élastique du deuxième élément élastique ne peut pas positionner seule la deuxième bobine au niveau du côté d'ouverture du corps de vanne contre une pression de gaz appliquée à une extrémité de la deuxième bobine au niveau du côté d'ouverture du corps de vanne.

4. Vanne pilote selon l'une quelconque des revendications 1 ou 2, dans laquelle une zone entre le corps de vanne et la première bobine est scellée par des éléments d'étanchéité (85c), et une zone entre la première bobine et la deuxième bobine est scellée par contact entre une surface périphérique interne de la première bobine ayant une précision de surface élevée et une surface périphérique externe de la deuxième bobine ayant une précision de surface élevée.

5. Vanne pilote selon l'une quelconque des revendications 1 à 4, dans laquelle le corps de vanne inclut :
une partie cylindrique creuse (81) ayant les portions à trou traversant et s'ouvrant au niveau de l'une extrémité et d'une autre extrémité de celle-ci ;
une partie couvercle (82) fermant l'autre extrémité de la partie cylindrique ; et
un bouton de retour (83) prévu dans la partie couvercle à une position faisant face à l'autre extrémité de la deuxième bobine, laquelle est opposée au côté d'ouverture du corps de vanne, le bouton de retour étant capable d'être actionné pour presser l'autre extrémité de la deuxième bobine vers le côté d'ouverture du corps de vanne.
